# FASCICULE DE BREVET EUROPEEN

(11) **EP 3 776 842 B1**
(45) Date de publication et mention de la délivrance du brevet: **19.04.2023**
(21) Numéro de dépôt: 19718798.2
(22) Date de dépôt: 26.03.2019
(51) Int. Cl.: H02P 27/08, H02P 29/00, H02P 7/29

(54) **GROUPE MOTO-VENTILATEUR POUR VÉHICULE AUTOMOBILE COMPRENANT UNE CARTE ÉLECTRONIQUE DE COMMANDE D'UN MOTEUR ÉLECTRIQUE**
MOTOR-LÜFTER-EINHEIT FÜR EIN KRAFTFAHRZEUG MIT EINER ELEKTRONISCHEN KARTE ZUR STEUERUNG EINES ELEKTROMOTORS
MOTOR-FAN UNIT FOR A MOTOR VEHICLE COMPRISING AN ELECTRONIC CARD FOR CONTROLLING AN ELECTRIC MOTOR

(30) Priorité: 05.04.2018 FR 1852966
(43) Date de publication de la demande: 17.02.2021
(73) Titulaire: VALEO SYSTEMES THERMIQUES, 78320 Le Mesnil Saint-Denis (FR)
(72) Inventeur: FRANCO, Ismaël, 78322 LE MESNIL SAINT-DENIS CEDEX (FR); DE SOUZA, Stéphane, 78322 LE MESNIL SAINT-DENIS CEDEX (FR); PROVINZANO, Biagio, 78322 LE MESNIL SAINT-DENIS CEDEX (FR); LAAIOUNI, Iliass, 78322 LE MESNIL SAINT-DENIS CEDEX (FR)
(74) Mandataire: Valeo Systèmes Thermiques
(86) Numéro de dépôt international: PCT/FR2019/050676
(87) Numéro de publication internationale: WO 2019/193266

(56) Documents cités:
- WO-A2-2004/019477
- GB-A- 2 554 589
- US-A1- 2004 001 542
- US-A1- 2017 353 131

## Description

### DOMAINE TECHNIQUE DE L'INVENTION

La présente invention concerne un groupe moto-ventilateur pour véhicule automobile comprenant une carte électronique de commande d'un moteur électrique.

Elle trouve une application particulière, mais non limitative dans les véhicules automobiles.

### ARRIÈRE-PLAN TECHNOLOGIQUE DE L'INVENTION

Un groupe moto-ventilateur pour véhicule automobile comprend de manière connue de l'homme du métier :
- un moteur électrique ;
- une carte électronique de commande dudit moteur électrique.

Ladite carte électronique de commande comprend :
- un dispositif d'acquisition d'au moins une grandeur caractéristique dudit groupe moto-ventilateur ;
- un dispositif de pilotage configuré pour piloter ledit moteur électrique via un signal primaire à modulation de largeur d'impulsion.

Ladite au moins une grandeur caractéristique est utilisée pour le pilotage dudit moteur électrique. Elle sert de paramètre d'entrée pour une boucle de régulation dudit pilotage. Le dispositif de pilotage comprend des interrupteurs MOSFET configurés pour générer le signal primaire à modulation de largeur d'impulsion. La commutation des interrupteurs MOSFET génère des pics de courant qui perturbent l'acquisition de ladite au moins une grandeur caractéristique. Par conséquent un filtre passe-bas avec une fréquence de coupure déterminée est utilisé pour atténuer les pics de courant.

Un inconvénient de cet état de la technique est que le filtre passe-bas n'est pas suffisant. L'acquisition est toujours perturbée. De plus, le filtre entraîne une latence sur lesdites acquisitions qui a pour conséquence un pilotage moins réactif et moins stable dudit moteur électrique. Le temps de réponse pour piloter le moteur électrique n'est pas optimisé par rapport à une grandeur caractéristique d'entrée donnée pour la boucle de régulation du pilotage.

Le document US2017/353131 A1 fait partie de l'état de la technique.

Le document WO 2004/019477 A2 divulgue un groupe moto-ventilateur (GMV) selon le préambule de la revendication 1.

Dans ce contexte, la présente invention vise à résoudre l'inconvénient précédemment mentionné.

### DESCRIPTION GENERALE DE L'INVENTION

A cette fin, l'invention propose un groupe moto-ventilateur pour véhicule automobile selon la revendication 1.

En particulier, le déclenchement de l'acquisition est décalé par rapport à un front montant et un descendant dudit signal primaire à modulation de largeur d'impulsion. Par conséquent, ladite acquisition, autrement appelée mesure, est réalisée à un instant qui est décalé par rapport à un front montant et un descendant dudit signal primaire à modulation de largeur d'impulsion.

Ainsi, comme on va le voir en détail ci-après, le fait que l'acquisition de ladite au moins une grandeur caractéristique soit décalée et synchrone par rapport au signal primaire à modulation de largeur d'impulsion permet d'éviter qu'elle ne soit perturbée par les pics de courant dus aux commutations des interrupteurs du dispositif de pilotage. On s'éloigne ainsi des fronts montants et descendants du signal primaire à modulation de largeur d'impulsion qui correspond auxdites commutations. Par conséquent on obtient une acquisition sans erreur. Cela permet de compléter l'effet du filtre passe-bas. Par conséquent on peut utiliser un filtre passe-bas avec une fréquence de coupure réduite ce qui permet de ne plus avoir de latence sur les acquisitions et de réduire la taille et le coût dudit filtre passe-bas.

Selon des modes de réalisation non limitatifs, le groupe moto-ventilateur peut comporter en outre une ou plusieurs caractéristiques supplémentaires parmi les suivantes :
Selon un mode de réalisation non limitatif, ladite au moins une grandeur caractéristique est un courant moteur, une tension moteur, une tension batterie, ou une température carte. Ces grandeurs caractéristiques influent sur le pilotage du moteur électrique.

Selon un mode de réalisation non limitatif, ledit signal de déclenchement est un signal secondaire à modulation de largeur d'impulsion. Cela permet de commander le déclenchement de l'acquisition par un dispositif d'acquisition qui est un élément indépendant du dispositif de pilotage.

Selon un mode de réalisation non limitatif, ladite acquisition s'effectue sur un front montant ou descendant dudit signal secondaire à modulation de largeur d'impulsion.

Selon un mode de réalisation non limitatif, ladite acquisition s'effectue sur un front montant lorsque ledit signal secondaire à modulation de largeur d'impulsion est à polarité paire ou sur un front descendant lorsque ledit signal secondaire à modulation de largeur d'impulsion est à polarité impaire. Cela permet de bien s'éloigner des fronts montants et descendants du signal primaire à modulation de largeur d'impulsion de sorte que l'acquisition soit le moins impactée par les commutations des interrupteurs du dispositif de pilotage.

Selon l'invention, si ledit signal primaire à modulation de largeur d'impulsion comprend un rapport cyclique primaire inférieur ou égal à cinquante pour cent, ledit déclenchement de ladite acquisition s'effectue à un instant égal au rapport cyclique primaire divisé par deux plus cinquante pour cent. Ainsi, on mesure la grandeur caractéristique à un instant éloigné d'un front montant ou descendant du signal primaire à modulation de largeur d'impulsion. Les mesures ne sont ainsi pas perturbées par les commutations des interrupteurs du dispositif de pilotage, ces commutations étant commandées par ledit signal primaire à modulation de largeur d'impulsion.

Selon un mode de réalisation non limitatif, si ledit signal primaire à modulation de largeur d'impulsion comprend un rapport cyclique primaire supérieur à cinquante pour cent, ledit déclenchement de ladite acquisition s'effectue à un instant égal au rapport cyclique primaire divisé par deux. Ainsi, on mesure la grandeur caractéristique à un instant éloigné d'un front montant ou descendant du signal primaire à modulation de largeur d'impulsion. Les mesures ne sont ainsi pas perturbées par les commutations des interrupteurs du dispositif de pilotage.

Selon un mode de réalisation non limitatif, ledit dispositif d'acquisition ne fait pas partie dudit dispositif de pilotage. Il est indépendant dudit dispositif de pilotage.

Selon un mode de réalisation non limitatif, ledit signal de déclenchement est une interruption. Cela permet de commander le déclenchement de l'acquisition par un dispositif d'acquisition qui fait partie du dispositif de pilotage.

Selon un mode de réalisation non limitatif, ladite interruption est envoyée à un instant égal :
- à un rapport cyclique primaire dudit signal primaire à modulation de largeur d'impulsion divisé par deux plus cinquante pour cent, si ledit signal primaire à modulation de largeur d'impulsion comprend un rapport cyclique primaire inférieur ou égal à cinquante pour cent ; ou
- à un rapport cyclique primaire dudit signal primaire à modulation de largeur d'impulsion divisé par deux, si ledit signal primaire à modulation de largeur d'impulsion comprend un rapport cyclique primaire supérieur à cinquante pour cent.

Ainsi, on mesure la grandeur caractéristique à un instant éloigné d'un front montant ou descendant du signal primaire à modulation de largeur d'impulsion. Les mesures ne sont ainsi pas perturbées par les commutations des interrupteurs du dispositif de pilotage.

Selon un mode de réalisation non limitatif, ledit dispositif d'acquisition fait partie dudit dispositif de pilotage.

Il est également proposé un procédé de commande d'un moteur électrique pour groupe moto-ventilateur pour véhicule automobile selon la revendication 9.

### BREVE DESCRIPTION DES FIGURES

L'invention et ses différentes applications seront mieux comprises à la lecture de la description qui suit et à l'examen des figures qui l'accompagnent :

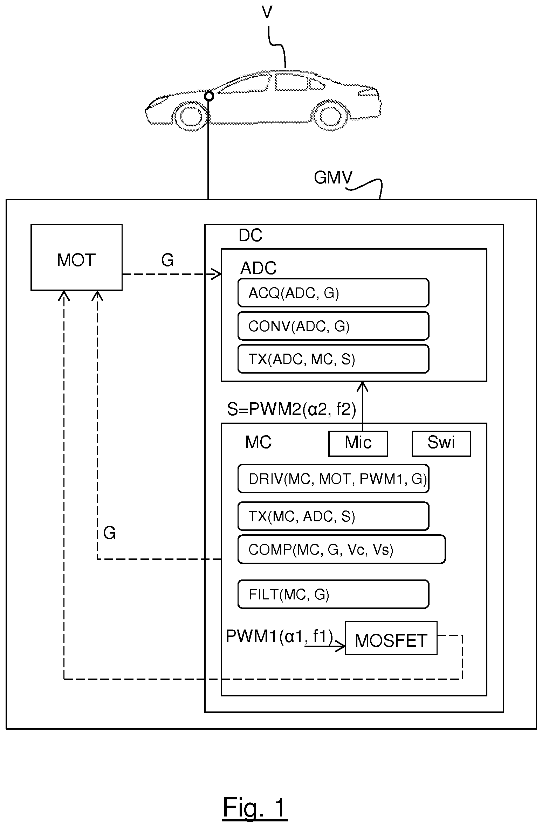

- la figure 1 représente un schéma d'un groupe moto-ventilateur pour véhicule automobile comprenant un moteur électrique et une carte électronique de commande, ladite carte électronique de commande comprenant un dispositif d'acquisition et un dispositif de pilotage, selon un premier mode de réalisation non limitatif ;

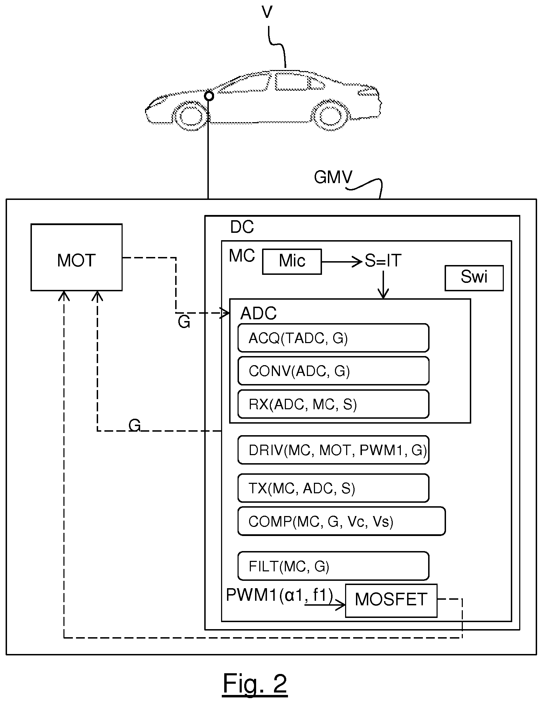

- la figure 2 représente un schéma d'un groupe moto-ventilateur pour véhicule automobile comprenant un moteur électrique et une carte électronique de commande, ladite carte électronique de commande comprenant un dispositif d'acquisition et un dispositif de pilotage, selon un deuxième mode de réalisation non limitatif ;

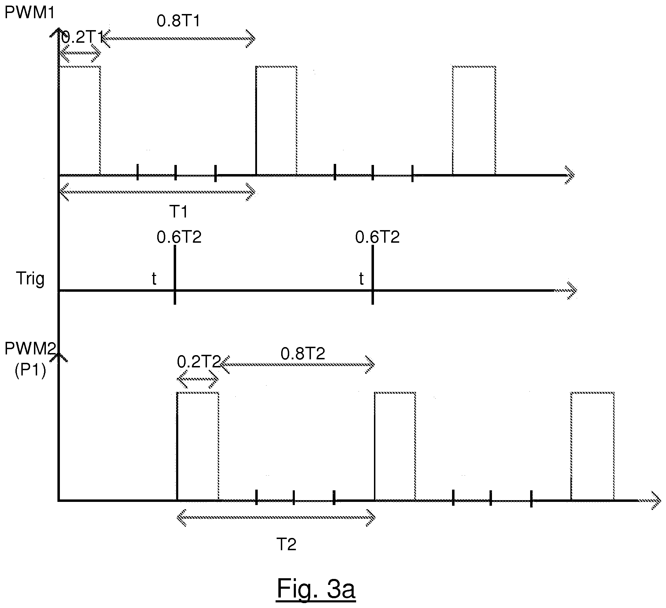

- la figure 3a représente un diagramme d'un signal primaire à modulation de largeur d'impulsion et un signal secondaire à modulation de largeur d'impulsion à polarité paire émis par le dispositif de pilotage de la figure 1, lesdites signaux primaire et secondaire à modulation de largeur d'impulsion comprenant un rapport cyclique selon une première variante de réalisation non limitative ;

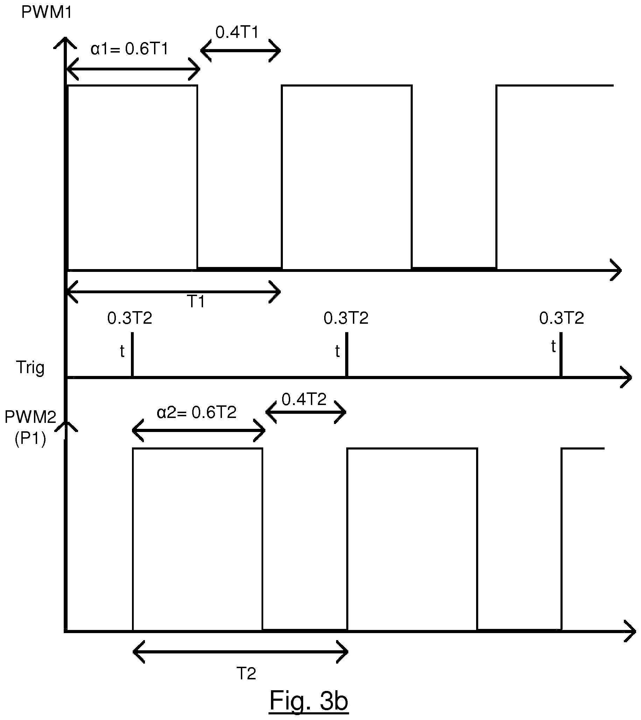

- la figure 3b représente un diagramme d'un signal primaire à modulation de largeur d'impulsion et un signal secondaire à modulation de largeur d'impulsion à polarité paire émis par le dispositif de pilotage de la figure 1, lesdites signaux primaire et secondaire à modulation de largeur d'impulsion comprenant un rapport cyclique selon une deuxième variante de réalisation non non limitative ;

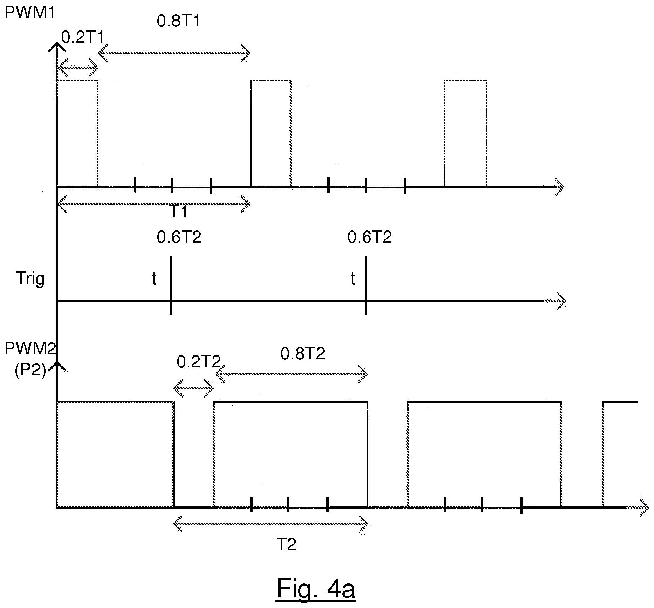

- la figure 4a représente un diagramme d'un signal primaire à modulation de largeur d'impulsion et un signal secondaire à modulation de largeur d'impulsion à polarité impaire émis par le dispositif de pilotage de la figure 1, lesdites signaux primaire et secondaire à modulation de largeur d'impulsion comprenant un rapport cyclique selon une première variante de réalisation non limitative ;

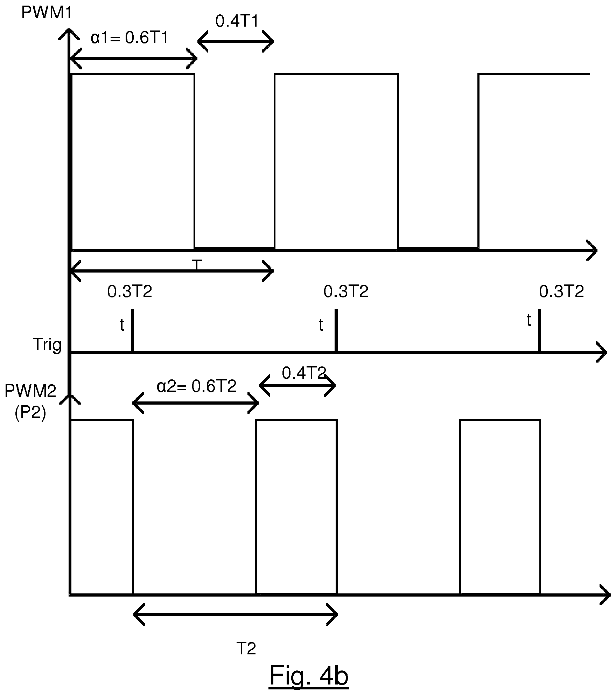

- la figure 4b représente un diagramme d'un signal primaire à modulation de largeur d'impulsion et un signal secondaire à modulation de largeur d'impulsion à polarité impaire émis par le dispositif de pilotage de la figure 1, lesdites signaux primaire et secondaire à modulation de largeur d'impulsion comprenant un rapport cyclique selon une deuxième variante de réalisation non non limitative ;

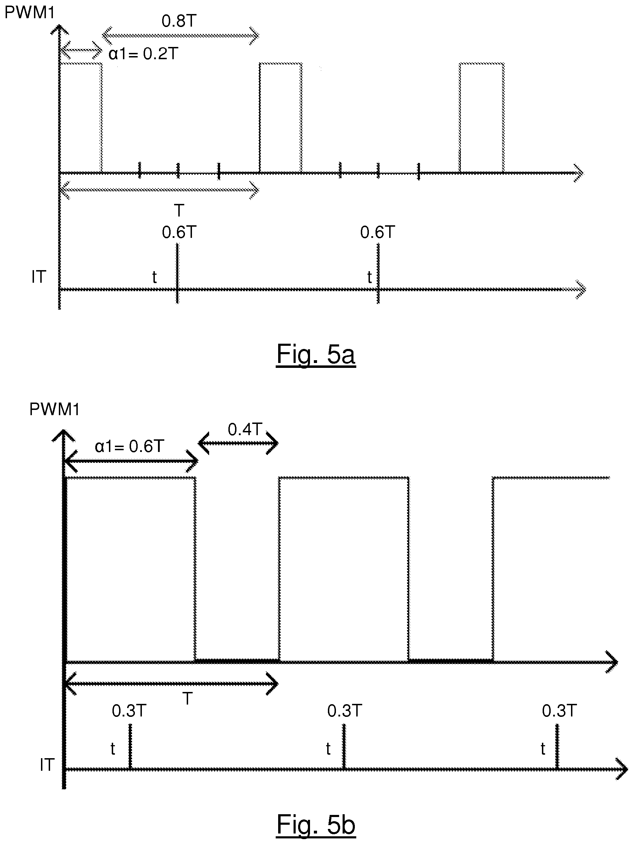

- la figure 5a représente un diagramme d'un signal primaire à modulation de largeur d'impulsion et une interruption émise par le dispositif de pilotage de la figure 2, selon une première variante de réalisation non limitative ;
- la figure 5b représente un diagramme d'un signal primaire à modulation de largeur d'impulsion et une interruption émis par le dispositif de pilotage de la figure 2, selon une deuxième variante de réalisation non limitative ;

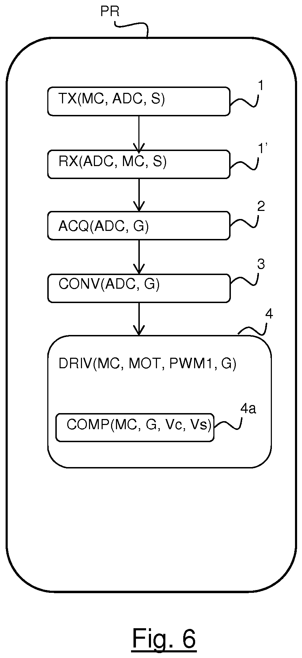

- la figure 6 représente un organigramme d'un procédé de commande d'un moteur électrique mise en oeuvre par un groupe moto-ventilateur pour véhicule automobile selon un mode de réalisation non limitatif.

### DESCRIPTION DE MODES DE REALISATION DE L'INVENTION

Les éléments identiques, par structure ou par fonction, apparaissant sur différentes figures conservent, sauf précision contraire, les mêmes références.

Un groupe moto-ventilateur GMV pour véhicule automobile V selon l'invention est décrit en référence aux figures 1 à 5b selon un mode de réalisation non limitatif.

Par véhicule automobile, on entend tout type de véhicule motorisé.

Dans un mode de réalisation non limitatif, le groupe-moto-ventilateur GMV fait partir d'un pulseur d'air. Dans un mode de réalisation non limitatif, le pulseur d'air fait partie d'un dispositif de climatisation, de ventilation et/ou de chauffage (non illustré), appelé en anglais HVAC « Heating Ventilation and Air Conditioning » pour véhicule automobile.

Le dispositif de climatisation, de ventilation et/ou de chauffage HVAC comprend en outre un boîtier et des conduits d'air (non illustrés) dans lesquels sont disposés un ou plusieurs échangeurs de chaleur qui vont permettre de conditionner thermiquement (c'est-à-dire réchauffer ou refroidir) un flux d'air les traversant. Ledit flux d'air est destiné à aboutir dans l'habitacle du véhicule automobile V par l'intermédiaire d'au moins une sortie d'air dudit boîtier. Un dispositif de chauffage, ventilation et/ou climatisation HVAC pour véhicule automobile est généralement disposé sous la planche du bord du véhicule automobile.

Tel qu'illustré sur les figures 1 et 2, le groupe moto-ventilateur GMV comprend :
- un moteur électrique MOT ;
- une carte électronique de commande CD dudit moteur électrique MOT, ladite carte électronique de commande CD comprenant :
   - un dispositif d'acquisition ADC d'au moins une grandeur caractéristique G dudit groupe moto-ventilateur GMV ;
   - un dispositif de pilotage MC dudit moteur électrique MOT.

Le moteur électrique MOT est avec ou sans balais.

Le groupe moto-ventilateur GMV comprend en outre de manière connue de l'homme du métier, un support moteur (non illustré) dans lequel est logé ledit moteur électrique et une roue (non illustrée) de type centrifuge montée sur l'arbre moteur du moteur électrique. Le groupe moto-ventilateur est, par ailleurs, monté sur le système de chauffage, ventilation et/ou climatisation HVAC au niveau d'une volute. La volute est par exemple définie par les parois du boîtier du système de chauffage, ventilation et/ou climatisation. La volute est ainsi un conduit d'air présentant une section variable qui guide l'écoulement d'un flux d'air. La roue disposée dans la volute permet d'aspirer l'air axialement par l'entrée d'air de la volute (c'est-à-dire selon un axe sensiblement parallèle à l'axe de révolution de la roue) et de refouler radialement (c'est-à-dire selon un axe sensiblement orthogonal à l'axe de révolution de la roue) l'air ainsi aspiré par la sortie d'air de la volute. L'ensemble « groupe moto-ventilateur et volute » est généralement désigné par le terme « pulseur d'air ».

Dans un mode de réalisation non limitatif, la carte électronique de commande DC est une carte à circuit imprimé dite PCBA « Printed Circuit Board Assembly » en anglais.

Les éléments de la carte électronique de commande DC sont décrits en détail ci-après.

### • Dispositif d'acquisition ADC

Dans un mode de réalisation non limitatif, le dispositif d'acquisition ADC est un convertisseur analogique-numérique.

Il est configuré pour acquérir au moins une grandeur caractéristique G dudit groupe moto-ventilateur (fonction illustrée sur les figures 1 et 2 ACQ(ADC, G)), à savoir mesurer une grandeur physique G.

Dans un mode de réalisation non limitatif, le dispositif d'acquisition ADC est configuré pour acquérir une pluralité de grandeurs caractéristiques G.

Dans un mode de réalisation non limitatif illustré sur la figure 1, le dispositif d'acquisition ADC est externe audit dispositif de pilotage MC.

Dans un autre mode de réalisation non limitatif illustré sur la figure 2, le dispositif d'acquisition ADC fait partie dudit dispositif de pilotage MC.

Dans des modes de réalisation non limitatifs, ladite au moins une grandeur caractéristiques G est un courant moteur i, une tension moteur Uv, une tension batterie Vbat, ou une température carte tp, etc.

Ces grandeurs physiques G influent sur la commande dudit moteur électrique MOT. Ce sont ainsi des paramètres d'entrées pour une boucle de régulation pour le pilotage dudit moteur électrique MOT.

Les grandeurs physiques G comprennent des valeurs de régulation et des valeurs de protection.

Dans des exemples non limitatifs, on retrouve comme valeurs de régulation le courant moteur i, la tension moteur Uv. Ainsi, la tension moteur Uv est régulée en fonction d'une tension moteur de consigne, et le courant moteur i est régulé en fonction d'un courant de consigne moteur. De manière connue de l'homme du métier, la vitesse moteur Vit dépend de la tension moteur Uv et la tension moteur Uv est obtenue à partir de la tension batterie Vbat. On utilise en effet la tension batterie Vbat pour définir le rapport cyclique primaire α1 décrit plus loin qui permettra d'atteindre la tension moteur de consigne. On a en effet la tension moteur de consigne égale à Vbat * α1. Ainsi pour obtenir une tension moteur Uv de 6Volts avec une tension batterie de 12Volts, on aura α1 = 50%.

Dans des exemples non limitatifs, on retrouve comme valeur de protection, la tension batterie Vbat ou la température carte tp. Ainsi, si la température carte tp dépasse une température seuil, le moteur électrique MOT peut être coupé. Ainsi, si la tension batterie Vbat dépasse une tension batterie seuil, le moteur électrique MOT peut être coupé.

La grandeur caractéristique G est acquise sous forme analogique.

Le dispositif d'acquisition ADC est en outre configuré pour convertir la grandeur caractéristique G acquise sous forme analogique en une valeur numérique (fonction illustrée sur les figures 1 et 2 CONV(ADC, G)).

Dans un mode de réalisation non limitatif, le dispositif d'acquisition ADC est configuré pour acquérir une pluralité d'échantillons de mesure d'une même grandeur caractéristique G.

Le dispositif d'acquisition ADC est ainsi configuré pour acquérir au moins deux fois une grandeur caractéristique G. Ainsi, il mesure au moins deux fois la grandeur caractéristique G de sorte à avoir au moins deux échantillons de mesure.

Le dispositif d'acquisition ADC est en outre configuré pour recevoir dudit dispositif de pilotage MC un signal de déclenchement S (fonction illustrée sur les figures 1 et 2 RX(ADC, MC, S)). Ce signal de déclenchement S lui permet de savoir à quel moment il doit acquérir une grandeur caractéristique G, à savoir à quel moment il doit faire une mesure de ladite grandeur caractéristique G.

### • Dispositif de pilotage MC

Le dispositif de pilotage MC est appelé « driver » en anglais.

Le dispositif de pilotage MC est configuré pour :
- piloter ledit moteur électrique MOT via un signal primaire à modulation de largeur d'impulsion PWM1 (fonction illustrée sur les figures 1 et 2 DRIV(MC, MOT, PWM1, G)) ;
- envoyer audit dispositif d'acquisition ADC un signal de déclenchement S pour déclencher ladite acquisition, ledit signal de déclenchement S étant décalé et synchrone par rapport au signal primaire à modulation de largeur d'impulsion PWM1 (fonction illustrée sur les figures 1 et 2 TX(MC, ADC, S)).

Dans la suite de la description, le signal primaire à modulation de largeur d'impulsion PWM1 sera également appelé signal PWM1.

Le pilotage s'effectue en fonction de ladite au moins une grandeur caractéristique G acquise. Ainsi, le dispositif de pilotage MC est configuré pour piloter ledit moteur électrique MOT en fonction de ladite au moins une grandeur caractéristique G.

Dans un mode de réalisation non limitatif, le dispositif de pilotage MC comprend de manière connue de l'homme du métier des interrupteurs Swi configurés pour piloter ledit moteur électrique MOT en fonction dudit signal primaire à modulation de largeur d'impulsion PWM1. Le signal PWM1 est ainsi envoyé auxdits interrupteurs Swi. Dans un exemple non limitatif illustré sur les figures 1 et 2, ces interrupteurs Swi sont des MOSFET. Les interrupteurs Swi commutent en fonction des fronts montants et descendants du signal primaire à modulation de largeur d'impulsion PWM1.

Dans un mode de réalisation non limitatif, le dispositif de pilotage MC comprend en outre un microcontrôleur Mic. Le microcontrôleur Mic est configuré pour envoyer ledit signal primaire à modulation de largeur d'impulsion PWM1.

Le signal primaire à modulation de largeur d'impulsion PWM1 comprend un rapport cyclique α1 et une fréquence f1. Dans un exemple non limitatif, la fréquence f1 est égale à 20kHz, ce qui correspond à une période T1 de 50 microsecondes. On rappelle qu'un rapport cyclique α est le rapport existant entre la durée du temps haut du signal PWM (à savoir la durée de commutation d'un interrupteur) divisé par la période.

L'acquisition d'une grandeur caractéristique G, autrement appelée mesure d'une grandeur physique G, est une mesure d'une valeur analogique. Comme décrit ci-dessous, elle est effectuée à un moment différent d'une commutation d'un interrupteur Swi du dispositif de pilotage MC de sorte à ne pas être perturbée par le bruit engendré par ladite commutation. De plus, l'acquisition est effectuée à un moment suffisamment éloigné d'une commutation pour ne pas être perturbé par le bruit engendré par ladite commutation.

Comme décrit précédemment, dans un mode de réalisation non limitatif, le ledit dispositif de pilotage MC comprend ou non ledit dispositif d'acquisition ADC. A cet effet, le dispositif de pilotage MC déclenche l'acquisition d'une grandeur caractéristique G par ledit dispositif d'acquisition ADC, selon deux modes de réalisation non limitatifs décrits ci-dessous.

### ∘ Premier mode de réalisation non limitatif

Tel qu'illustré sur la figure 1, selon ce premier mode de réalisation non limitatif, le dispositif d'acquisition ADC est indépendant dudit dispositif de pilotage MC, à savoir c'est un composant électronique externe audit dispositif de pilotage MC et ne fait donc pas partie dudit dispositif de pilotage MC.

Tel qu'illustré sur les figures 3a et 3b, selon ce premier mode de réalisation non limitatif, ledit signal de déclenchement S de ladite acquisition est un signal secondaire à modulation de largeur d'impulsion PWM2 émis par ledit dispositif de pilotage MC, ledit signal secondaire à modulation de largeur d'impulsion PWM2 étant synchrone et décalé par rapport au signal primaire à modulation de largeur d'impulsion PWM1.

Dans la suite de la description, le signal secondaire à modulation de largeur d'impulsion PWM2 sera également appelé signal PWM2.

Dans un mode de réalisation non limitatif, le dispositif de pilotage MC comprend ainsi en mémoire une copie du signal PWM1, ladite copie étant le signal PWM2.

Dans un mode de réalisation non limitatif, le signal PWM2 est à polarité paire P1 (tel qu'illustré sur les figures 3a et 3b) ou à polarité impaire P2 (tel qu'illustré sur les figures 4a et 4b). Comme illustré, les fronts montants du signal PWM2 à polarité impaire P2 correspondent aux fronts descendants du signal PWM2 à polarité paire P1, et ses fronts descendants correspondent aux fronts montants du signal PWM2 à polarité paire P1. Un signal PWM2 à polarité impaire P2 est donc complémentaire d'un signal PWM2 à polarité paire P1.

Comme on peut le voir sur les figures, le signal PWM2 comprend une fréquence f2 égale à la fréquence f1 du signal PWM1, à savoir une période T2 égale à celle T1 du signal PWM1, et un rapport cyclique secondaire α2 égal au rapport cyclique primaire α1 du signal PWM1. Ainsi, dans un exemple non limitatif, une acquisition d'une même grandeur caractéristique G est réalisée toute les 50 microsecondes.

On peut observer que l'on a un décalage entre les deux signaux à modulation de largeur d'impulsion, primaire PWM1 et secondaire PWM2. Ainsi les fronts montants et descendants du signal PWM2 sont décalés dans le temps par rapport aux fronts montants et descendants du signal PWM1. Ils ne tombent pas aux mêmes instants.

Dans un mode de réalisation non limitatif, le déclenchement de l'acquisition d'une grandeur caractéristique G s'effectue sur un front montant ou sur un front descendant dudit signal PWM2.

En particulier, dans une variante de réalisation non limitative, le déclenchement de l'acquisition d'une grandeur caractéristique G s'effectue :
- sur un front montant lorsque le signal PWM2 est à polarité paire P1 ; et
- sur un front descendant lorsque le signal PWM2 est à polarité impaire P2.

Ainsi, selon l'invention, si ledit signal PWM1 comprend un rapport cyclique primaire α1 ≤ 50%, ledit déclenchement de l'acquisition s'effectue à un instant t égal au rapport cyclique primaire α1 divisé par deux plus cinquante pour cent.

Dans un mode de réalisation non limitatif, si ledit signal PWM1 comprend un rapport cyclique primaire α1 > 50%, ledit déclenchement de l'acquisition s'effectue à un instant t égal au rapport cyclique primaire α1 divisé par deux. L'instant t du déclenchement est calculé en fonction du front montant ou descendant du signal PWM2 et de sa polarité comme décrit ci-après.

### ▪ Front montant

Selon la figure 3a, selon une première variante de réalisation non limitative, si ledit signal PWM1 comprend un rapport cyclique primaire α1 ≤ 50% et le signal PWM2 est à polarité paire P1, le déclenchement de l'acquisition s'effectue à un instant t = α1/2 + 50%. Ainsi, dans l'exemple non limitatif de la figure 3a, on a α1 = 20%, on obtient t = 60%.

On a un déclenchement sur un front montant du signal PWM2 à polarité paire P1.

On a ainsi un déclenchement sur un front montant du signal PWM2 éloigné du front montant du signal PWM1, et également éloigné d'un front descendant du signal PWM1. Par ailleurs, on a un déclenchement centré par rapport à un front descendant du signal PWM1 et au front montant suivant dudit signal PWM1. On a ainsi un déclenchement centré par rapport à deux commutations successives d'un interrupteur Swi sur un état bas.

Selon la figure 3b, selon une deuxième variante de réalisation non limitative, si ledit signal PWM1 comprend un rapport cyclique primaire α1 > 50% et le signal PWM2 est à polarité paire P1, le déclenchement de l'acquisition s'effectue à un instant t = α1/2. Ainsi, dans l'exemple non limitatif de la figure 3b, on a α1 = 60%, on obtient t = 30%.

On a un déclenchement sur un front montant du signal PWM2 à polarité paire P1.

On a ainsi un déclenchement sur un front montant du signal PWM2 éloigné d'un front montant du signal PWM1, et également éloigné d'un front descendant du signal PWM1. Par ailleurs, on a un déclenchement centré par rapport à un front montant du signal PWM1 et au front descendant suivant dudit signal PWM1. On a ainsi un déclenchement centré par rapport à deux commutations successives d'un interrupteur Swi sur un état haut.

### ▪ Front descendant

Selon la figure 4a, selon une première variante de réalisation non limitative, si ledit signal PWM1 comprend un rapport cyclique primaire α1 ≤ 50% et le signal PWM2 est à polarité impaire P2, le déclenchement de l'acquisition s'effectue à un instant t= α1/2 + 50%. Ainsi, dans un exemple non limitatif, si on a α1 = 20%, on obtient une acquisition à t = 60%.

On a un déclenchement sur un front descendant du signal PWM2 à polarité impaire.

On a ainsi un déclenchement sur un front descendantdu signal PWM2 éloigné d'un front montant du signal PWM1, et également éloigné d'un front descendant du signal PWM1. Par ailleurs, on a un déclenchement centré par rapport à un front descendantdu signal PWM1 et au front montantsuivant dudit signal PWM1. On a ainsi un déclenchement centré par rapport à deux commutations successives d'un interrupteur Swi sur un état bas.

Selon la figure 4b, selon une deuxième variante de réalisation non limitative, si ledit signal PWM1 comprend α1 > 50% est à polarité impaire P2, le déclenchement de l'acquisition s'effectue à un instant t= α1/2. Ainsi, si on a α1 = 60%, on une acquisition à t = 30%.

On a un déclenchement sur un front descendant du signal PWM2 à polarité impaire.

On a ainsi un déclenchement sur un front descendantdu signal PWM2 éloigné du front montant du signal PWM1, et également éloigné d'un front descendant du signal PWM1. Par ailleurs, on a un déclenchement centré par rapport à un front montantdu signal PWM1 et au front descendant suivant dudit signal PWM1. On a ainsi un déclenchement centré par rapport à deux commutations successives d'un interrupteur Swi sur un état haut.

Selon ces quatre variantes de réalisation non limitatives, on peut observer que le déclenchement de l'acquisition référencé Trig sur les figures 3a à 4b, se fait à des instants t éloignés des fronts montants ou descendants du signal primaire à modulation de largeur d'impulsion PWM1. Ainsi, l'acquisition par le dispositif d'acquisition ADC n'est pas perturbée par une commutation d'un interrupteur Swi dudit dispositif de pilotage MC.

### ∘ Deuxième mode de réalisation non limitatif

Tel qu'illustré sur la figure 2, selon ce deuxième mode de réalisation non limitatif, le dispositif d'acquisition ADC fait partie dudit dispositif de pilotage MC, à savoir c'est un composant électronique interne audit dispositif de pilotage MC.

Tel qu'illustré sur les figures 5a et 5b, selon ce deuxième mode de réalisation non limitatif, ledit signal de déclenchement S est une interruption IT, ladite interruption IT étant synchrone et décalée par rapport au signal primaire à modulation de largeur d'impulsion PWM1. A savoir, elle est décalée par rapport au front montant et descendant dudit signal PWM1.

Le dispositif de pilotage MC comprend ainsi en mémoire le rapport cyclique primaire α1 et la fréquence primaire f1 ou la période primaire T1 du signal PWM1. Il utilise un temporisateur qui est fonction du rapport cyclique primaire α1 et de la fréquence primaire f1 ou de la période primaire T1 pour envoyer l'interruption IT audit dispositif d'acquisition ADC de sorte que ladite interruption IT soit décalée par rapport au signal PWM1. Ainsi, dans un exemple non limitatif, une acquisition d'une même grandeur caractéristique G est réalisée toute les 50 microsecondes.

Selon la figure 5a, selon une première variante de réalisation non limitative, si ledit signal PWM1 comprend un rapport cyclique primaire α1 ≤ 50%, ladite interruption IT est envoyée à un instant t = α1 / 2 + 50%. Ainsi, dans l'exemple non limitatif illustré, on a α1 = 20%, on obtient t = 60%.

On a ainsi un déclenchement éloigné d'un front montant ou descendant du signal PWM1. Par ailleurs, on a un déclenchement centré par rapport à un front descendant du signal PWM1 et au front montant suivant dudit signal PWM1. On a ainsi un déclenchement centré par rapport à deux commutations successives d'un interrupteur Swi sur un état bas.

Selon la figure 5b, selon une deuxième variante de réalisation non limitative, si ledit signal PWM1 comprend un rapport cyclique primaire α1 > 50%, ladite interruption IT est envoyée à un instant t = α1 / 2. Ainsi, dans l'exemple non limitatif illustré, on a α1 = 60%, on obtient t = 30%.

On a ainsi un déclenchement éloigné d'un front montant ou descendant du signal PWM1. Par ailleurs, on a un déclenchement centré par rapport à un front montant du signal PWM1 et au front descendant suivant dudit signal PWM1. On a ainsi un déclenchement centré par rapport à deux commutations successives d'un interrupteur Swi sur un état haut.

Selon ces deux variantes de réalisation non limitatives, on peut observer sur les figures 5a et 5b que le déclenchement de l'acquisition référencé Trig, à savoir l'envoi de l'interruption IT, se fait à des instants t éloignés des fronts montants et descendants du signal primaire à modulation de largeur d'impulsion PWM1.

Ainsi, l'acquisition par le dispositif d'acquisition ADC n'est pas perturbée par une commutation d'un interrupteur Swi dudit dispositif de pilotage MC.

Grâce à l'acquisition d'une grandeur caractéristique G par le dispositif d'acquisition ADC, on obtient une valeur analogique d'un échantillon de mesure qui sera convertit en une valeur numérique par ledit dispositif d'acquisition ADC.

Dans un mode de réalisation non limitatif, le dispositif de pilotage MC compare la valeur numérique avec une valeur seuil Vs ou avec une valeur de consigne Vc (fonction illustrée sur les figures 1 et 2 COMP(MC, G, Vc, Vs) pour confirmer si la grandeur caractéristique G ainsi mesurée a dépassé la valeur seuil Vs par exemple, ou a atteint la valeur de consigne Vc par exemple.

Les échantillons de mesure d'une grandeur caractéristique G étant stables, à savoir lesdits échantillons de mesure ne sont pas perturbés par les commutations des interrupteurs Swi du dispositif de pilotage MC, cela a pour conséquence que le pilotage du moteur électrique MOT est plus réactif et stable.

Dans le cas où plusieurs échantillons de mesure sont acquis par le dispositif d'acquisition ADC, après conversion en des valeurs numériques, dans un mode de réalisation non limitatif, le dispositif de pilotage MC est en outre configuré pour effectuer un filtrage numérique desdits échantillons de mesure (fonction illustrée sur les figures 1 et 2 FILT(MC, G). Cela permet de confirmer la valeur de la grandeur caractéristique G mesurée à partir desdits échantillons de mesure. Dans un exemple non limitatif, le filtrage numérique permet de filtrer les échantillons de mesure trop éloignées de la moyenne des valeurs. Dans un exemple non limitatif, le filtrage numérique est une moyenne desdits échantillons de mesure.

Dans un exemple non limitatif, la vitesse de filtrage est de l'ordre de quelques millisecondes. Ainsi, si la vitesse de filtrage est de 2ms, on prend un échantillon de mesure sur quatre. Les échantillons de mesure ainsi retenus sont le 1^{er}, le 4^{ème}, le 8^{ème} échantillons etc. Avec une période T2=50µs, on obtient ainsi 10 échantillons de mesure.

Le filtrage numérique s'applique à des valeurs de protection, telle que dans un exemple non limitatif la température carte tp ou la tension batterie Vbat, qui évoluent lentement plutôt qu'à des valeurs de régulation.

En filtrant plusieurs échantillons de mesure, cela permet de confirmer par exemple la valeur de la température carte tp et être sûr que ladite valeur de température carte tp n'était pas une valeur ponctuelle isolée. Ainsi, ce mode de réalisation non limitatif permet de filtrer la(les) valeur(s) d'une grandeur caractéristique G qui est trop différente des autres par exemple. Le filtrage comprend par exemple une moyenne de tous les échantillons de mesure ou deux fois l'écart-type de tous les échantillons de mesure.

On notera qu'en filtrant plusieurs échantillons de mesure de la même grandeur caractéristique G, cela induit un léger délai dans la boucle de régulation du pilotage du moteur électrique MOT. Aussi, pour les grandeurs physiques G qui sont des valeurs de régulation, telles que dans des exemples non limitatifs le courant moteur i ou la tension moteur Uv, il n'est pas nécessaire d'appliquer ce mode de réalisation non limitatif. On notera que contrairement à un filtre passe-bas qui a besoin d'une vingtaine d'échantillons de mesure, le filtrage numérique utilise moins d'échantillons de mesure pour confirmer la valeur d'une grandeur caractéristique G.

Ainsi, lorsqu'il existe un filtrage numérique, le dispositif de pilotage MC effectue une comparaison desdits échantillons de mesure filtrés, à savoir de leur moyenne dans un exemple non limitatif, avec une valeur seuil Vs. Dans l'exemple non limitatif de la vitesse de filtrage de 2ms, le dispositif de pilotage MC effectue la comparaison avec une moyenne des 10 échantillons de mesure.

Ainsi, le groupe-moto ventilateur GMV décrit précédemment est configuré pour mettre en oeuvre un procédé de commande PR d'un moteur électrique MOT dudit groupe moto-ventilateur GMV pour véhicule automobile. Ledit procédé de commande PR comprend les étapes suivantes, tel qu'illustré sur la figure 6, dans un mode de réalisation non limitatif. Dans ce mode de réalisation non limitatif, il n'y a pas de filtrage numérique.

**A l'étape 1),** le dispositif de pilotage MC envoie un signal de déclenchement S pour déclencher l'acquisition par ledit dispositif d'acquisition ADC d'au moins une grandeur caractéristique G dudit groupe moto-ventilateur GMV, ledit signal de déclenchement S étant décalé et synchrone par rapport au signal primaire à modulation de largeur d'impulsion PWM1.

**A l'étape 1'),** ledit dispositif d'acquisition ADC reçoit ledit signal de déclenchement S.

**A l'étape 2),** ledit dispositif d'acquisition ADC acquiert ladite au moins une grandeur caractéristique G.

La grandeur caractéristique G est sous forme analogique.

**A l'étape 3),** ledit dispositif d'acquisition ADC effectue une conversion analogique-numérique sur ladite grandeur caractéristique G. On obtient une valeur numérique de la grandeur caractéristique G.

**A l'étape 4),** le dispositif de pilotage MC pilote ledit moteur électrique MOT via le signal primaire à modulation de largeur d'impulsion PWM1, et en fonction de ladite grandeur caractéristique G acquise.

Dans un mode de réalisation non limitatif, le dispositif de pilotage MC effectue une comparaison de la grandeur caractéristique G, à savoir de sa valeur numérique, avec une valeur de seuil Vs ou une valeur de consigne Vc (étape 4a).

Bien entendu la description de l'invention n'est pas limitée aux modes de réalisation ou applications décrits ci-dessus.

Ainsi, dans une autre application non limitative, le groupe-moto ventilateur GMV est un groupe moto-ventilateur face avant pour refroidir ledit moteur électrique MOT.

Ainsi, l'invention peut s'appliquer pour tout groupe-moto ventilateur comprenant un dispositif de pilotage comprenant des interrupteurs Swi dont les commutations occasionnent du bruit.

Ainsi, l'invention décrite présente notamment les avantages suivants :
- c'est une solution simple à mettre en oeuvre et peu coûteuse ;
- elle évite d'utiliser un filtre passe-bas trop gros et trop coûteux qui ralentit la réactivité du pilotage du moteur électrique MOT en particulier de la boucle de régulation ayant pour paramètre d'entrée ladite au moins une grandeur caractéristique G. Elle permet ainsi d'avoir un temps de réponse par rapport à une tension moteur de consigne optimisé et permet ainsi de maîtriser le pilotage du moteur électrique MOT ;
- elle permet de réduire le bruit occasionné par les commutations des interrupteurs Swi du dispositif de pilotage MC lors de l'acquisition des grandeurs physiques G, bruit qui perturbe les mesures, puisque ladite acquisition est effectuée en dehors des moments de commutations. Elle permet ainsi d'éviter les zones de commutations où les mesures sont perturbées. Ainsi, dans un exemple non limitatif, on ne peut plus avoir une mesure d'un pic de tension batterie Vbat qui viendrait perturber la tension moteur Uv et donc la vitesse moteur Vit et par conséquent tout le pilotage dudit moteur électrique MOT ;
- elle permet de mesurer de manière synchrone les grandeurs physiques par rapport au signal de commande du moteur électrique MOT, à savoir par rapport au signal PWM1, au lieu d'une mesure asynchrone n'importe quand dans le temps comme dans l'état de la technique antérieur. On peut ainsi déterminer le moment exact de l'acquisition de ladite au moins une grandeur caractéristique G.

## Revendications

1. Groupe moto-ventilateur (GMV) pour véhicule automobile (V) comprenant un moteur électrique (MOT) et une carte électronique de commande (CD) dudit moteur électrique (MOT), ladite carte électronique de commande (CD) comprenant :
- un dispositif d'acquisition (ADC) d'au moins une grandeur caractéristique (G) dudit groupe moto-ventilateur (GMV) ;
- un dispositif de pilotage (MC) configuré pour piloter ledit moteur électrique (MOT) via un signal primaire à modulation de largeur d'impulsion (PWM1) ;
ledit dispositif de pilotage (MC) étant en outre configuré pour envoyer audit dispositif d'acquisition (ADC) un signal de déclenchement (S) pour déclencher ladite acquisition, ledit signal de déclenchement (S) étant décalé et synchrone par rapport audit signal primaire à modulation de largeur d'impulsion (PWM1),
**caractérisé en ce que** si ledit signal primaire à modulation de largeur d'impulsion (PWM1) comprend un rapport cyclique primaire (α1) inférieur ou égal à cinquante pour cent, ledit déclenchement de ladite acquisition s'effectue à un instant (t) égal au rapport cyclique primaire (α1) divisé par deux plus cinquante pour cent.

2. Groupe moto-ventilateur (GMV) selon la revendication 1, selon lequel ladite au moins une grandeur caractéristique (G) est un courant moteur (i), une tension moteur (Uv), une tension batterie (Vbat), ou une température carte (tp).

3. Groupe moto-ventilateur (GMV) selon la revendication 1 ou la revendication 2, selon lequel ledit signal de déclenchement (S) est un signal secondaire à modulation de largeur d'impulsion (PWM2).

4. Groupe moto-ventilateur (GMV) selon la revendication 3, selon lequel ladite acquisition s'effectue sur un front montant ou descendant dudit signal secondaire à modulation de largeur d'impulsion (PWM2).

5. Groupe moto-ventilateur (GMV) selon la revendication 4, selon lequel ladite acquisition s'effectue sur un front montant lorsque ledit signal secondaire à modulation de largeur d'impulsion (PWM2) est à polarité paire (P1) ou sur un front descendant lorsque ledit signal secondaire à modulation de largeur d'impulsion (PWM2) est à polarité impaire (P2).

6. Groupe moto-ventilateur (GMV) l'une quelconque des revendications précédentes, selon lequel si ledit signal primaire à modulation de largeur d'impulsion (PWM1) comprend un rapport cyclique primaire (α1) supérieur à cinquante pour cent, ledit déclenchement de ladite acquisition s'effectue à un instant (t) égal au rapport cyclique primaire (α1) divisé par deux.

7. Groupe moto-ventilateur (GMV) selon la revendication 1 ou la revendication 2, selon lequel ledit signal de déclenchement (S) est une interruption (IT).

8. Groupe moto-ventilateur (GMV) selon la revendication 7, selon lequel ladite interruption (IT) est envoyée à un instant (t) égal :
- à un rapport cyclique primaire (α1) dudit signal primaire à modulation de largeur d'impulsion (PWM1) divisé par deux plus cinquante pour cent, si ledit signal primaire à modulation de largeur d'impulsion (PWM1) comprend un rapport cyclique primaire (α1) inférieur ou égal à cinquante pour cent ; ou
- à un rapport cyclique primaire (α1) dudit signal primaire à modulation de largeur d'impulsion (PWM1) divisé par deux, si ledit signal primaire à modulation de largeur d'impulsion (PWM1) comprend un rapport cyclique primaire (α1) supérieur à cinquante pour cent.

9. Procédé de commande (PR) d'un moteur électrique (MOT) d'un groupe moto-ventilateur (GMV) pour véhicule automobile (V), ledit procédé de commande (PR) comprenant :
- l'acquisition par un dispositif d'acquisition (ADC) d'au moins une grandeur caractéristique (G) dudit groupe moto-ventilateur (GMV) ;
- le pilotage par un dispositif de pilotage (MC) dudit moteur électrique (MOT) via un signal primaire à modulation de largeur d'impulsion (PWM1) ;
ledit procédé de commande (PR) comprenant en outre l'envoi par ledit dispositif de pilotage (MC) audit dispositif d'acquisition (ADC) d'un signal de déclenchement (S) de ladite acquisition, ledit signal de déclenchement (S) étant décalé et synchrone par rapport audit signal primaire à modulation de largeur d'impulsion (PWM1),
**caractérisé en ce que** si ledit signal primaire à modulation de largeur d'impulsion (PWM1) comprend un rapport cyclique primaire (α1) inférieur ou égal à cinquante pour cent, ledit déclenchement de ladite acquisition s'effectue à un instant (t) égal au rapport cyclique primaire (α1) divisé par deux plus cinquante pour cent.

## Patentansprüche

1. Motor-Lüfter-Einheit (GMV) für ein Kraftfahrzeug (V), die einen Elektromotor (MOT) und eine elektronische Karte (CD) zur Steuerung des Elektromotors (MOT) beinhaltet, wobei die elektronische Steuerkarte (CD) Folgendes beinhaltet:
- eine Vorrichtung zur Erfassung (ADC) mindestens einer Kenngröße (G) der Motor-Lüfter-Einheit (GMV);
- eine Ansteuerungsvorrichtung (MC), die dazu konfiguriert ist, den Elektromotor (MOT) mittels eines pulsweitenmodulierten Primärsignals (PWM1) anzusteuern;
wobei die Ansteuerungsvorrichtung (MC) ferner dazu konfiguriert ist, ein Auslösesignal (S) an die Erfassungsvorrichtung (ADC) zu senden, um die Erfassung auszulösen, wobei das Auslösesignal (S) mit Bezug auf das pulsweitenmodulierte Primärsignal (PWM1) versetzt und zu diesem synchron ist,
**dadurch gekennzeichnet, dass**, wenn das pulsweitenmodulierte Primärsignal (PWM1) ein primäres Tastverhältnis (α1) kleiner als oder gleich fünfzig Prozent beinhaltet, die Auslösung der Erfassung zu einem Zeitpunkt (t) erfolgt, der gleich dem primären Tastverhältnis (α1) geteilt durch zwei plus fünfzig Prozent ist.

2. Motor-Lüfter-Einheit (GMV) nach Anspruch 1, wobei die mindestens eine Kenngröße (G) ein Motorstrom (i), eine Motorspannung (Uv), eine Batteriespannung (Vbat) oder eine Kartentemperatur (tp) ist.

3. Motor-Lüfter-Einheit (GMV) nach Anspruch 1 oder Anspruch 2, wobei das Auslösesignal (S) ein pulsweitenmoduliertes Sekundärsignal (PWM2) ist.

4. Motor-Lüfter-Einheit (GMV) nach Anspruch 3, wobei die Erfassung an einer steigenden oder fallenden Flanke des pulsweitenmodulierten Sekundärsignals (PWM2) erfolgt.

5. Motor-Lüfter-Einheit (GMV) nach Anspruch 4, wobei die Erfassung an einer steigenden Flanke erfolgt, wenn das pulsweitenmodulierte Sekundärsignal (PWM2) eine gerade Polarität (P1) aufweist, oder an einer fallenden Flanke erfolgt, wenn das pulsweitenmodulierte Sekundärsignal (PWM2) eine ungerade Polarität (P2) aufweist.

6. Motor-Lüfter-Einheit (GMV) nach einem beliebigen der vorhergehenden Ansprüche, wobei, wenn das pulsweitenmodulierte Primärsignal (PWM1) ein primäres Tastverhältnis (α1) größer als fünfzig Prozent beinhaltet, die Auslösung der Erfassung zu einem Zeitpunkt (t) erfolgt, der gleich dem primären Tastverhältnis (α1) geteilt durch zwei ist.

7. Motor-Lüfter-Einheit (GMV) nach Anspruch 1 oder Anspruch 2, wobei das Auslösesignal (S) eine Unterbrechung (IT) ist.

8. Motor-Lüfter-Einheit (GMV) nach Anspruch 7, wobei die Unterbrechung (IT) zu einem Zeitpunkt (t) gesendet wird, der Folgendem entspricht:
- einem primären Tastverhältnis (α1) des pulsweitenmodulierten Primärsignals (PWM1) geteilt durch zwei plus fünfzig Prozent, wenn das pulsweitenmodulierte Primärsignal (PWM1) ein primäres Tastverhältnis (α1) beinhaltet, das kleiner als oder gleich fünfzig Prozent ist; oder
- einem primären Tastverhältnis (α1) des pulsweitenmodulierten Primärsignals (PWM1) geteilt durch zwei, wenn das pulsweitenmodulierte Primärsignal (PWM1) ein primäres Tastverhältnis (α1) beinhaltet, das größer als fünfzig Prozent ist.

9. Verfahren zur Steuerung (PR) eines Elektromotors (MOT) einer Motor-Lüfter-Einheit (GMV) für ein Kraftfahrzeug (V), wobei das Steuerverfahren (PR) Folgendes beinhaltet:
- Erfassen, durch eine Erfassungsvorrichtung (ADC), mindestens einer Kenngröße (G) der Motor-Lüfter-Einheit (GMV);
- Ansteuern, durch eine Ansteuerungsvorrichtung (MC), des Elektromotors (MOT) mittels eines pulsweitenmodulierten Primärsignals (PWM1);
wobei das Steuerverfahren (PR) ferner das Senden, durch die Ansteuerungsvorrichtung (MC) an die Erfassungsvorrichtung (ADC), eines Signals zur Auslösung (S) der Erfassung beinhaltet, wobei das Auslösesignal (S) mit Bezug auf das pulsweitenmodulierte Primärsignal (PWM1) versetzt und zu diesem synchron ist,
**dadurch gekennzeichnet, dass**, wenn das pulsweitenmodulierte Primärsignal (PWM1) ein primäres Tastverhältnis (α1) kleiner als oder gleich fünfzig Prozent beinhaltet, die Auslösung der Erfassung zu einem Zeitpunkt (t) erfolgt, der gleich dem primären Tastverhältnis (α1) geteilt durch zwei plus fünfzig Prozent ist.

## Claims

1. Motor-fan unit (GMV) for a motor vehicle (V) comprising an electric motor (MOT) and a control circuit board (CD) for controlling said electric motor (MOT), said control circuit board (CD) comprising:
- an acquisition device (ADC) for acquiring at least one characteristic quantity (G) of said motor-fan unit (GMV);
- a driver device (MC) configured to drive said electric motor (MOT) via a primary pulse width modulation signal (PWM1);
said driver device (MC) being further configured to send, to said acquisition device (ADC), a trigger signal (S) for triggering said acquisition, said trigger signal (S) being offset and synchronous with respect to said primary pulse width modulation signal (PWM1),
**characterized in that**, if said primary pulse width modulation signal (PWM1) comprises a primary duty cycle (α1) lower than or equal to fifty percent, said triggering of said acquisition takes place at an instant (t) equal to the primary duty cycle (αl) divided by two plus fifty percent.

2. Motor-fan unit (GMV) according to Claim 1, wherein said at least one characteristic quantity (G) is a motor current (i), a motor voltage (Uv), a battery voltage (Vbat), or a circuit board temperature (tp).

3. Motor-fan unit (GMV) according to Claim 1 or Claim 2, wherein said trigger signal (S) is a secondary pulse width modulation signal (PWM2).

4. Motor-fan unit (GMV) according to Claim 3, wherein said acquisition is performed on a rising or falling edge of said secondary pulse width modulation signal (PWM2).

5. Motor-fan unit (GMV) according to Claim 4, wherein said acquisition is performed on a rising edge when said secondary pulse width modulation signal (PWM2) is of even polarity (P1) or on a falling edge when said secondary pulse width modulation signal (PWM2) is of odd polarity (P2).

6. Motor-fan unit (GMV) according to any one of the preceding claims, wherein, if said primary pulse width modulation signal (PWM1) comprises a primary duty cycle (α1) higher than fifty percent, said triggering of said acquisition takes place at an instant (t) equal to the primary duty cycle (αl) divided by two.

7. Motor-fan unit (GMV) according to Claim 1 or Claim 2, wherein said trigger signal (S) is an interrupt (IT).

8. Motor-fan unit (GMV) according to Claim 7, wherein said interrupt (IT) is sent at an instant (t) equal:
- to a primary duty cycle (αl) of said primary pulse width modulation signal (PWM1) divided by two plus fifty percent, if said primary pulse width modulation signal (PWM1) comprises a primary duty cycle (α1) lower than or equal to fifty percent; or
- to a primary duty cycle (αl) of said primary pulse width modulation signal (PWM1) divided by two, if said primary pulse width modulation signal (PWM1) comprises a primary duty cycle (α1) higher than fifty percent.

9. Control method (PR) for controlling an electric motor (MOT) of a motor-fan unit (GMV) for a motor vehicle (V), said control method (PR) comprising:
- acquiring, by means of an acquisition device (ADC), at least one characteristic quantity (G) of said motor-fan unit (GMV);
- driving, by means of a driver device (MC), said electric motor (MOT) via a primary pulse width modulation signal (PWM1);
said control method (PR) further comprising said driver device (MC) sending, to said acquisition device (ADC), a trigger signal (S) for triggering said acquisition, said trigger signal (S) being offset and synchronous with respect to said primary pulse width modulation signal (PWM1),
**characterized in that**, if said primary pulse width modulation signal (PWM1) comprises a primary duty cycle (α1) lower than or equal to fifty percent, said triggering of said acquisition takes place at an instant (t) equal to the primary duty cycle (αl) divided by two plus fifty percent.
